# EUROPEAN PATENT SPECIFICATION

(11) **EP 1 868 807 B1**
(45) Date of publication and mention of the grant of the patent: **16.03.2011**
(21) Application number: 06738617.7
(22) Date of filing: 16.03.2006
(51) Int. Cl.: B32B 27/04, B31B 1/60, D06M 15/277, D06M 15/657, D06M 17/10

(54) **HYDROPHOBIC INSULATION MATERIAL**
HYDROPHOBES ISOLIERMATERIAL
MATERIAU ISOLANT HYDROPHOBE

(30) Priority: 16.03.2005 US 662627 P
(43) Date of publication of application: 26.12.2007
(73) Proprietor: Press, Stuart, Guilford CT 06437 (US)
(72) Inventor: Press, Stuart, Guilford CT 06437 (US)
(74) Representative: Wenzel & Kalkoff
(86) International application number: PCT/US2006/009579
(87) International publication number: WO 2006/102009

(56) References cited:
- EP-A- 0 600 843
- GB-A- 1 428 834
- US-A- 5 474 839
- US-A1- 2004 132 367
- US-B1- 6 380 336

## Description

### BACKGROUND OF THE INVENTION

The invention relates to hydrophobic insulation material and, especially, to hydrophobic multi-layer fabric-insulation material which is particularly useful in articles for outdoor use such as outerwear garments, sleeping bags, etc.

Such products, intended for outdoor use, frequently provide better results when they include insulation. The insulation is typically provided using various insulation materials, one type of which is a synthetic or non-synthetic expanded fibrous material. Examples of typical insulation material include products marketed under the trademarks Polar Guard™, Primaloft™, and Thinsulate^{™}.

While these insulation materials are frequently indicated in promotional materials to have hydrophobic qualities, it has been found that such qualities are not as effective as would be desirable.

EP 0 600 843 discloses a buoyant thermal insulator material, which comprises an assemblage of from 50 to 100% polymeric microfibers and from 0 to 50% synthetic binder fibers. According to Example 1, the polymeric microfibers have been treated with a water-repellent before the assemblage is formed. Afterwards, a polyester nonwoven fabric is applied to the insulator material.

US 5,474,839 discloses an apparel product, in particular a swimsuit, comprising a chemically adsorbed monomolecular film. The film is preferably hydrophilic, while the apparel product comprises hydrophobic fibers. The film is excellently water- and oil-repelling whithout negatively affecting properties of the underlying fibers such as appearance and flexibility.

US 6,380,336 discloses a water and oil repellency-imparting composition for fibrous substrates. The composition comprises a copolymer which accounts for the repelling properties. Samples of cotton cloth are treated with the composition and their properties are tested.

GB 1,428,834 discloses a process for forming an adhesive bond between two sheets of a flexible material like fabric or polymer foam. One side of each sheet is brought into contact with a mat of matted filament of a pressure-bonding adhesive, thus forming a laminate. The bond is formed by applying pressure to the laminate.

The present invention provides an insulated fabric as defined in claim 1 and a method for making a hydrophobic insulation material as defined in claim 11.

The insulated fabric according to the invention comprises:
a hydrophobic insulation material, comprising a fibrous material having fibers with fiber surfaces, and a hydrophobic material on the fiber surfaces; and
a fabric, the insulation material being joined to the fabric at a plurality of discontinuous bonding points, wherein bonding points between the fabric and the insulation material are substantially free of hydrophobic material.

The method according to the invention comprises the steps of:
providing a fibrous material having fibers with fiber surfaces; and
applying a hydrophobic material to the fiber surfaces, wherein the providing step comprises providing an insulated fabric comprising the fibrous material bonded at discontinuous bonding points to a fabric; and
wherein the applying step comprises submersing the insulated fabric in a bath of hydrophobic material.

The present invention provides a solution to a long standing need in connection with such articles through providing an insulation material with extremely effective treatment to provide a hydrophobic property to the material. While the broad scope of the invention is drawn to treatment of the insulation material itself, a further object of the invention is to provide a multilayer hydrophobic material which has additional desirable properties.

Other objects and advantages of the present invention will appear hereinbelow.

### SUMMARY OF THE INVENTION

It has been found that insulation material can advantageously be treated with fluoropolymer materials to provide excellent hydrophobic qualities. Such insulation material, when exposed to water, can advantageously be completely freed of this water in a single shake or motion of the insulation material. This is far superior to any results obtained or witnessed in connection with commercially available insulation materials.

In accordance with the present invention, the insulation material is a multi-layer structure including a fabric layer and an insulation layer, wherein the insulation layer is bonded to the fabric layer, and the combined multi-layer structure is then treated to provide hydrophobic properties, preferably through treatment in a fluoropolymer bath.

According to the invention, a particularly desirable end product is provided by starting with a woven or non-woven fabric and a synthetic or non-synthetic insulation layer, and bonding of the fabric and the insulation materials together. This can be done, for example, using a urethane adhesive, and preferably provides discontinuous bonding points between the fabric and the insulation as desired. This multi-layer insulation structure is then treated with fluoropolymer materials to provide the desired hydrophobic qualities to both the fabric and the insulation material. This can advantageously be accomplished by treating the multi-layer insulation material in a bath containing the suitable fluoropolymer materials, and following the bath, the fluoropolymer treated multi-layer insulation material can then be dried and cured, for example, on a tenter frame or the like, to allow good configuration of the product during drying. This is preferably done with the fabric layer facing upwardly so that the insulation material, as it is dried and cured, hangs down from the fabric and thereby results in a good loft or thickness of the insulation material, as well as a tendency to maintain this loft.

### BRIEF DESCRIPTION OF THE DRAWINGS

A detailed description of preferred embodiments of the present invention follows, with reference to the attached drawings, wherein;

FIG. 1 is a side schematic view of a multi-layer insulation material in accordance with the present invention; and

FIG. 2 is a schematic illustration of a process in accordance with the present invention.

### DETAILED DESCRIPTION

The invention relates to hydrophobic insulation materials. More specifically, the invention relates to a hydrophobic multi-layer fabric-insulation material structure, and a method for making same.

According to the invention, the insulation material is advantageously a continuous or discontinuous filament polyester material, or any other suitable synthetic or non-synthetic insulation material, for example: down, continuous filament polyester, polyolefin and the like. While it is within the broad scope of the present invention to treat specifically this material with the fluoropolymer bath so as to obtain hydrophobic qualities of the insulation itself, the preferred embodiment of the present invention involves the bonding of this insulation material to a woven or non-woven fabric material, examples of which include nylon, cotton, aramid (Kevlar), polyester, polyolefin yarn, polyethylene, polypropylene, cellulosic materials, wool, plant fibers and like. This provides a multi-layer structure which is then treated according to the invention to impart the desired hydrophobic properties.

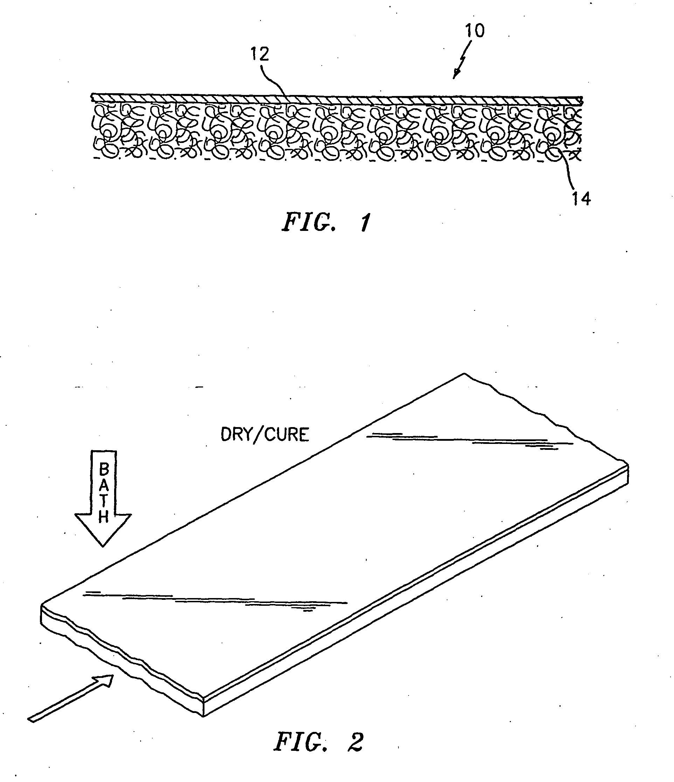

Fig. 1 shows a cross section of material 10 according to the invention showing fabric 12 and insulation material 14. In accordance with the invention, insulation material 14 is bonded to fabric 12, preferably in discontinuous bond, so that fabric 12 can hold insulation 14 in place relative to a plane of fabric 12, while still allowing substantially free movement of ' insulation 14 relative to fabric 12 which can occur during twisting or flexing of material 10, for example, during normal use of an object which is made using material 10.

In accordance with the invention, and as further described below, material 10 as shown in Fig. 1 is advantageously treated with a hydrophobic-imparting material such as fluoropolymer in a fluoropolymer bath, with the end result being that both fabric 12 and insulation 14 are treated with fluoropolymer. This advantageously serves to provide both fabric 12 and insulation material 14 with hydrophobic properties, and a multi-layer structure as shown in Fig. 1 can be substantially completely freed of water with a single shake of the material.

### FABRIC

In accordance with the invention, the fabric to which insulation material can be bonded can advantageously be any of a broad range of suitable fabrics such as those described above. Particularly preferred fabrics include woven or non-woven, synthetic or non-synthetic materials, for example, nylon, polyester, aramid and/or cotton. Of course, other materials can be used for the fabric component well within the scope of the present invention.

The fabric is preferably a substantially thin layer, preferably having a weight of less than or equal to about 142 grams (5 ounces), more preferably less than or equal to about 57 grams (2 ounces) for garments and sleeping bag applications. This fabric can be suited to the desired end use. Thus, depending upon whether the multi-layer insulation is to be incorporated into a garment or a sleeping bag or some other article, other desirable properties of the fabric may appear.

### INSULATION MATERIAL

The insulation material to be incorporated into the article of the present invention can advantageously be any synthetic or non-synthetic insulation material. Further examples of suitable insulation material include down insulation, polyester, polyolefin, continuous filament polyester, and the like, and combinations thereof. Of course, other types of insulation can be used in accordance with the present invention, and a wide variety of suitable insulation materials would be well known to a person of ordinary skill in the art.

Fibrous insulation material, or any other type of insulation material which can be treated with fluoropolymer to provide hydrophobic properties as well as loft and resistance to loss of loft, would be well suited for use with the present invention.

### BATH

According to the invention, the bath is advantageously a water or solvent based blend or solution of hydrophobic-imparting agent such as fluoropolymer, and may also include wetting agent and/or a curing agent. The fluoropolymer-imparting agent can advantageously be fluorocarbon or any other suitable material such as acrylic fluoropolymer dispersion, silicone treatment and the like. The wetting agent can advantageously be an alcohol. The curing agent can advantageously be an amine material, preferably a melamine-formaldehyde resin solution such as Resimene® from Solutia, Inc., melamine and/or water based isocyanate. The result of treating the insulation material in the bath, it is believed, is to deposit a monomolecular layer of fluoropolymer on the surfaces so treated.

The curing agent reacts with the insulation material for example polyester, and gives the material more stiffness. This advantageously helps prevent the insulation material from bottoming out, and enhances insulation properties. This added stiffness may also help to preserve and/or restore the loft of the insulation material.

An example of a suitable water based bath solution is as follows:

| Component | Amount | Preferred |
|---|---|---|
| water (heated) | 166,9 kg (368 lbs.) | |
| alkanol 6112 surfactant | 114 gr. | |
| Aerotex 3730 resin | ≥ 272 gr. | 816 gr. |
| Dow Corning White Y-30 | 300 ml. | |
| Freecat accelerator | 9.5 gr. | |
| Zonyl 8070 | ≥ 5,44 kg (12 lbs.) | 16,33 kg (36 lbs.) |

As set forth above, solvent based solutions can also be desirable. The following is related to a suitable example of such a solvent based solution.

In accordance with the present invention, fluoropolymer materials which have been found to provide excellent results include proprietary fluoropolymer materials provided under the trade name Zonyl 8070 and Zonyl 7040 by Ciba-Geigy Corporation, although other fluoropolymers would be suitable.

A suitable solvent is any solvent which is effective on urethane and polyurethane films and compatible with the fluoropolymer so as to provide interaction between the urethane and the fluoropolymer material. One excellent solvent for use in accordance with the present invention is tetrahydrofuran (THF), although others are suitable.

In accordance with the present invention, additional components may be incorporated into the solution, if desired. For example, melamine formaldehyde compositions can be incorporated into the solution for enhancing properties of resulting treated surfaces. Examples of such compositions include melamine-formaldehyde resin solutions such as Resimene 730® provided by Solutia, Inc., and melamine-formaldehyde condensate resins such as Freerez® as provided by Noveon, Inc. In each case, such materials may advantageously be provided with a particular solvent or accelerator to enhance the operation of this material when applied to polyurethane. For example, ethyl acid phosphate is one catalyst that can advantageously be combined with melamine-formaldehyde resins to enhance action between the melamine-formaldehyde resin solution and polyurethane material. Another example of a suitable accelerator is FreeCat™ provided by Freedom Textile Chemicals Company, although other accelerators will be known and readily available to a person of ordinary skill in the art.

Another solvent which may suitably be incorporated into the solution, if desired, is N-methyl pyrrolidine, or MPYROL, which may be desirable in small amounts for enhancing interaction between the fluoropolymer and urethane materials.

Depending upon the components used, it may also be desirable to incorporate an anti-foam agent into the solution, and one example of a suitable anti-foam agent is Antifoam Y-30 emulsion, provided by Dow Corning Corporation. Also depending upon the components used in solution, a surfactant may be desirable such as, for example, Alkanol 6112 surfactant provided by DuPont Chemicals.

The various ingredients to be used in solution can be prepared as follows.

The solvents to be used should be measured into a suitable vessel or drum. Separately, the fluoropolymer material should be provided in solution, typically in an aqueous solution as in the case of Zonyl 8070, or in solution with a solvent as in the case of Zonyl 7040, and be mixed with any accelerators to be used. The fluoropolymer solution is then mixed with the solvents and any additional solvents to be used can then be added to the solution as well.

Melamine formaldehyde compositions, if they are to be used, can then be added, typically along with any desired compatible accelerators, anti-foam agents and surfactants.

With sufficient mixing, the solution is now ready for use.

The various ingredients to be incorporated into the solution may advantageously be incorporated in amounts as shown below:

| | |
|---|---|
| Component | Amount |
| solvent | 18,14 kg (40 lbs.) |
| fluoropolymer | 0,36-3,63 kg (0.8-8 lbs.) |
| accelerator | 0-20 gr. |
| melamine-formaldehyde condensate | 0-100 gr. |
| surfactant | 0-40 gr. |
| anti-foam agent | 0-500 gr. |
| catalyst | 0-375 gr. |
| melamine-formaldehyde resin solution | 0-3,63 kg (0-8 lbs.) |

The amounts presented in Table 1 above are based upon a 40 lbs. starting amount of solvent. This starting solvent may be a blend of solvents, for example a blend of THF and MPYROL, and the THF and MPYROL may advantageously be provided at ratios of 80-98% wt. THF and 2-20% wt. MPYROL. The remaining amounts presented in Table 1 are based upon suitable amounts in accordance with the present invention based upon the 40 lbs. solvent.

One particular example of a solution according to the solvent based embodiment which provides excellent results in accordance with the present invention is as described below:

| Component | Amount |
|---|---|
| THF | 16,33 kg (36 lbs.) |
| MPYROL | 1,81 kg (4 lbs.) |
| fluoropolymer (Zonyl 8070) | 1,59 kg (3.5 lbs.) |
| accelerator (FreeCat) | 11 gr. |
| melamine-formaldehyde Condensate | |
| (Freerez MW) | 79 gr. |
| surfactant (Alkanol 6112) | 25 gr. |
| anti-foam agent | 65 gr. |
| ethyl acid phosphate | 18 gr. |
| melamine-formaldehyde resin solution (Resimene 730) | 2,04 kg (4.5 lbs.) |

### PROCESSING

As set forth above, the fabric and insulation materials are advantageously bonded together, preferably with a discontinuous bonding.

It is desired that these layers be bonded together prior to treatment in the bath of fluoropolymer, since it is understood that treatment with fluoropolymer may interfere with subsequent bond quality between components. Further aspects of the treatment method will be discussed below.

The bonded fabric/insulation material is, as set forth above, advantageously treated with a fluoropolymer material so as to provide the desired hydrophobic qualities to the material. This can be done, for example, by immersing the material in a vat containing the fluoropolymer bath, or in any other manner.

The immersion step in the bath is advantageously carried out at ambient conditions, and the material is positioned in the bath until thoroughly saturated with material.

The subsequent drying and curing steps can advantageously be conducted through applying heat, and the material in the drying and curing steps is advantageously positioned on a frame or other support which allows the insulation material to hang downwardly from the fabric. For example, a tenter frame can be used, holding the composite with the fabric side up, so that during the drying process, the insulation material has the tendency to hang downwardly and thereby dry with a greater loft as desired.

As an alternative, the treatment can be applied through a spray process, or through a patting process or the like.

As set forth above, the multi-layer material provides a particularly advantageous end result because the fabric serves to provide a good support for the insulation during the drying and curing process.

In accordance with the broadest aspect of the present invention, wherein only the insulation material is treated, with no fabric attached thereto, the insulation material can advantageously be supported in clips or other structure during the drying and curing process. This serves the similar purpose of allowing the dry and cure steps to impart loft to the insulation.

Returning to the embodiment which is a multi-layer structure, the bonding of insulation to fabric prior to treatment with fluoropolymer material is believed to provide a further advantage in that the resulting bond between insulation and fabric is a good bond, and this bond could be rendered difficult through treatment of either the fabric or the insulation material with fluoropolymer prior to the bonding.

It is understood that the invention is not limited to the illustrations described and shown herein, which are deemed to be merely illustrative of the best modes of carrying out the invention, and which are susceptible of modification of form, size, arrangement of parts and details of operation.

## Claims

1. An insulated fabric, comprising: a hydrophobic insulation material, comprising a fibrous material having fibers with fiber surfaces, and a hydrophobic material on the fiber surfaces; and a fabric, the insulation material being joined to the fabric at a plurality of discontinuous bonding points, wherein bonding points between the fabric and the insulation material are substantially free of hydrophobic material.

2. The insulated fabric of claim 1, wherein the hydrophobic material comprises fluoropolymer on the fiber surfaces.

3. The insulated fabric of claim 1, wherein the fibrous material is selected from the group consisting of synthetic fibers, non-synthetic fibers and combinations thereof.

4. The insulated fabric of claim 3, wherein the fibrous material is selected from the group consisting of polyester, polyolefin, down, continuous filament polyester and combinations thereof.

5. The insulated fabric of claim 1, wherein the fibers comprise curing agent-treated fibers which have a greater stiffness than fibers which are not treated.

6. The insulated fabric of claim 1, wherein the fabric is a woven or non-woven material selected from the group consisting of nylon, cotton, aramid, polyester, polyolefin yarn, polyethylene, polypropylene, cellulosic materials, wool, plant fibers and combinations thereof.

7. The insulated fabric of claim 1, wherein the fabric is joined to the insulation material with a urethane adhesive.

8. The insulated fabric of claim 1, wherein the hydrophobic material is on the fabric and on the fiber surfaces.

9. The insulated fabric of claim 1, wherein the fabric has a weight of less than or equal to about 142 grams (5 ounces).

10. The insulated fabric of claim 1, wherein the fabric has a weight of less than or equal to about 57 grams (2 ounces).

11. A method for making a hydrophobic insulation material, comprising the steps of:
providing a fibrous material having fibers with fiber surfaces; and
applying a hydrophobic material to the fiber surfaces, wherein the providing step comprises providing an insulated fabric comprising the fibrous material bonded at discontinuous bonding points to a fabric; and wherein the applying step comprises submersing the insulated fabric in a bath of hydrophobic material.

12. The method of claim 11, wherein the applying step comprises submersing the insulated fabric in a bath of hydrophobic-imparting material whereby hydrophobic material is applied to the fiber surfaces.

13. The method of claim 11, further comprising the step of drying the insulated fabric after the applying step in a position where the insulation material hangs downwardly from the fabric.

14. The method of claim 12, wherein the bath comprises a solution of hydrophobic-imparting material in a water or solvent base.

15. The method of claim 14, wherein the bath further comprises at least one of a wetting agent, a curing agent and an alcohol.

16. The method of claim 14, wherein the bath further comprises a wetting agent, a curing agent and an alcohol.

17. The method of claim 14, wherein the hydrophobic-imparting material is a fluoropolymer.

18. The method of claim 17, wherein the fluoropolymer is an acrylic fluoropolymer dispersion.

## Patentansprüche

1. Isoliergewebe, umfassend: ein hydrophobes Isoliermaterial, umfassend ein faserartiges Material, das Fasern mit Faserflächen aufweist, und ein hydrophobes Material auf den Faserflächen; und ein Gewebe, wobei das Isoliermaterial mit dem Gewebe an einer Vielzahl unterbrochener Bindungspunkte verbunden ist, wobei Bindungspunkte zwischen dem Gewebe und dem Isoliermaterial im Wesentlichen frei von hydrophobem Material sind.

2. Isoliergewebe nach Anspruch 1, wobei das hydrophobe Material Fluorpolymer auf den Faserflächen umfasst.

3. Isoliergewebe nach Anspruch 1, wobei das faserartige Material aus der Gruppe ausgewählt ist, bestehend aus synthetischen Fasern, nicht synthetischen Fasern und Kombinationen daraus.

4. Isoliergewebe nach Anspruch 3, wobei das faserartige Material aus der Gruppe ausgewählt ist, bestehend aus Polyester, Polyolefin, Daune, Polyester-Endlosfaser, und Kombinationen daraus.

5. Isoliergewebe nach Anspruch 1, wobei die Fasern mit Vernetzungsmittel behandelte Fasern umfassen, die eine größere Steifigkeit aufweisen als Fasern, die nicht behandelt sind.

6. Isoliergewebe nach Anspruch 1, wobei die Faser ein gewebtes oder nicht gewebtes Material ist, das aus der Gruppe ausgewählt ist, bestehend aus Nylon, Baumwolle, Aramid, Polyester, Polyolefingarn, Polyethylen, Polypropylen, Cellulosematerialien, Wolle, Pflanzenfasern und Kombinationen daraus.

7. Isoliergewebe nach Anspruch 1, wobei das Gewebe mit dem Isoliermaterial mit einem Urethanklebstoff verbunden ist.

8. Isoliergewebe nach Anspruch 1, wobei sich das hydrophobe Material auf dem Gewebe und auf den Faserflächen befindet.

9. Isoliergewebe nach Anspruch 1, wobei das Gewebe ein Gewicht von weniger als oder ungefähr gleich 142 Gramm (5 Unzen) aufweist.

10. Isoliergewebe nach Anspruch 1, wobei das Gewebe ein Gewicht von weniger als oder ungefähr gleich 57 Gramm (2 Unzen) aufweist.

11. Verfahren zum Herstellen eines hydrophoben Isoliermaterials, umfassend folgende Schritte:
Bereitstellen eines faserartigen Materials, das Fasern mit Faserflächen aufweist; und
Aufbringen eines hydrophoben Materials auf die Faserflächen, wobei der Schritt des Bereitstellens das Bereitstellen eines Isoliergewebes umfasst, umfassend das faserartige Material, das an unterbrochenen Bindungspunkten mit einem Gewebe verbunden ist; und wobei der Schritt des Aufbringens das Eintauchen des Isoliergewebes in ein Bad aus hydrophobem Material umfasst.

12. Verfahren nach Anspruch 11, wobei der Schritt des Aufbringens das Eintauchen des Isoliergewebes in ein Bad aus Hydrophobierungsmaterial umfasst, wobei das hydrophobe Material auf die Faserflächen aufgetragen wird.

13. Verfahren nach Anspruch 11, überdies umfassend den Schritt des Trocknens des Isoliergewebes nach dem Schritt des Aufbringens in einer Position, in der das Isoliermaterial vom Gewebe nach unten hängt.

14. Verfahren nach Anspruch 12, wobei das Bad eine Lösung aus Hydrophobierungsmaterial in einer Wasser- oder Lösungsmittelbasis umfasst.

15. Verfahren nach Anspruch 14, wobei das Bad überdies mindestens entweder ein Benetzungsmittel, ein Vernetzungsmittel oder einen Alkohol umfasst.

16. Verfahren nach Anspruch 14, wobei das Bad überdies ein Benetzungsmittel, ein Vernetzungsmittel und einen Alkohol umfasst.

17. Verfahren nach Anspruch 14, wobei das Hydrophobierungsmaterial ein Fluorpolymer ist.

18. Verfahren nach Anspruch 17, wobei das Fluorpolymer eine Fluorpolymerdispersion ist.

## Revendications

1. Tissu isolant, comprenant : un matériau isolant hydrophobe, comprenant un matériau fibreux ayant des fibres avec des surfaces fibreuses, et un matériau hydrophobe sur les surfaces fibreuses ; et un tissu, le matériau isolant étant lié au tissu sur une pluralité de points de collage discontinus, les points de collage entre le tissu et le matériau isolant étant sensiblement exempts de matériau hydrophobe.

2. Tissu isolant selon la revendication 1, dans lequel le matériau hydrophobe comprend du fluoropolymère sur les surfaces fibreuses.

3. Tissu isolant selon la revendication 1, dans lequel le matériau fibreux est sélectionné dans le groupe comprenant des fibres synthétiques, des fibres non-synthétiques et des combinaisons de celles-ci.

4. Tissu isolant selon la revendication 3, dans lequel le matériau fibreux est sélectionné dans le groupe comprenant du polyester, de la polyoléfine, du duvet, du polyester à filament continu et des combinaisons de ceux-ci.

5. Tissu isolant selon la revendication 1, dans lequel les fibres comprennent des fibres traitées par agent de réticulation présentant une rigidité supérieure à celle des fibres qui ne sont pas traitées.

6. Tissu isolant selon la revendication 1, dans lequel le tissu est un matériau tissé ou non-tissé sélectionné dans le groupe comprenant du nylon, du coton, de la fibre aramide, du polyester, du fil de polyoléfine, du polyéthylène, du polypropylène, des matériaux cellulosiques, de la laine, des fibres végétales et des combinaisons de ceux-ci.

7. Tissu isolant selon la revendication 1, dans lequel le tissu est lié au matériau isolant avec un adhésif à l'uréthane.

8. Tissu isolant selon la revendication 1, dans lequel le matériau hydrophobe est sur le tissu et sur les surfaces fibreuses.

9. Tissu isolant selon la revendication 1, dans lequel le tissu présente un poids inférieur ou égal à environ 142 grammes (5 onces).

10. Tissu isolant selon la revendication 1, dans lequel le tissu présente un poids inférieur ou égal à environ 57 grammes (2 onces).

11. Procédé de fabrication d'un matériau isolant hydrophobe, comprenant les étapes suivantes :
fourniture d'un matériau fibreux ayant des fibres avec des surfaces fibreuses ; et
application d'un matériau hydrophobe sur les surfaces fibreuses, dans lequel l'étape de fourniture comprend la fourniture d'un tissu isolant comprenant le matériau fibreux lié à un tissu au niveau de points de collage discontinus ; et dans lequel l'étape d'application comprend l'immersion du tissu isolant dans un bain de matériau hydrophobe.

12. Procédé selon la revendication 11, dans lequel l'étape d'application comprend l'immersion du tissu isolant dans un bain de matériau conférant des propriétés hydrophobes, le matériau hydrophobe étant appliqué sur les surfaces fibreuses.

13. Procédé selon la revendication 11, comprenant en outre l'étape de séchage du tissu isolant après l'étape d'application dans une position dans laquelle le matériau isolant pend vers le bas depuis le tissu.

14. Procédé selon la revendication 12, dans lequel le bain comprend une solution de matériau conférant des propriétés hydrophobes dans une base aqueuse ou de solvant.

15. Procédé selon la revendication 14, dans lequel le bain comprend en outre au moins un agent parmi un agent de mouillage, un agent de réticulation et un alcool.

16. Procédé selon la revendication 14, dans lequel le bain comprend en outre un agent de mouillage, un agent de réticulation et un alcool.

17. Procédé selon la revendication 14, dans lequel le matériau conférant des propriétés hydrophobes est un fluoropolymère.

18. Procédé selon la revendication 17, dans lequel le fluoropolymère est une dispersion de fluoropolymère acrylique.
